# EUROPÄISCHE PATENTANMELDUNG

(11) **EP 0 638 944 A1**
(43) Veröffentlichungstag der Anmeldung: **15.02.1995**
(21) Anmeldenummer: 94107888.3
(22) Anmeldetag: 21.05.1994
(51) Int. Cl.: H01M 2/12

(54) **Verschlussstopfen für einen Bleiakkumulator**

(30) Priorität: 14.08.1993 DE 9312173 U
(71) Anmelder: VARTA Batterie Aktiengesellschaft, D-30419 Hannover (DE)
(72) Erfinder: Kasner, Günter, D-58093 Hagen (DE); Lüger, Bernd, D-44536 Lünen (DE); Krichbaum, Jürgen, D-58091 Hagen (DE); Pichlo, Hans-Walter, D-58097 Hagen (DE)
(74) Vertreter: Kaiser, Dieter Ralf, Dipl.-Ing.

(57) **Zusammenfassung**

Ein Verschlußstopfen für einen Bleiakkumulator, der sowohl das Austreten von Säurenebeln aus der Zelle verhindert als auch deren schädigenden Einfluß auf die Funktion eines Sicherheitsventils ausschließt, ist so eingerichtet, daß die Zellengase auf ihrem Zwangswege nach draußen zuerst eine poröse Fritte und danach ein Druckentlastungsventil passieren. Ein Gehäusegrundkörper oder Sockel (1), dessen unterer Teil die Fritte (2) aufnimmt und mittels Renkverschluß in einer Einfüllöffnung des Akkumulatordeckels (3) befestigt ist, wird mit einem Druckentlastungsventil, bestehend aus Druckfeder (6) und Dichtteller (7) mit Dichtungsauflage (9), vormontiert und danach mit einer Abdeckkappe (8) durch Anklipsen an den Außenflansch (5) des Grundkörpers unlösbar verbunden.

## Beschreibung

Die Erfindung betrifft einen Verschlußstopfen für einen Bleiakkumulator mit einer mikroporösen Fritte und einem Druckentlastungsventil in einem Gehäuse, das abgedichtet gegen den Zellendeckel in der Elektrolyteinfüllöffnung befestigbar ist.

Verschlußstopfen müssen unter bestimmten Betriebsbedingungen des Akkumulators, z.B. während des Überladens, einen gefahrlosen Austritt der Ladegase gewährleisten. Der Stopfen fungiert in diesem Sinne als ein Belüftungsverschluß und besitzt häufig, einzeln und in Kombination miteinander, Sicherheitseinrichtungen, welche aus einer unkontrollierten Zellenentgasung der Umgebung drohende Schäden verhindern sollen.

Bekannt sind Druckentlastungsventile unterschiedlichster Konstruktionen, die nur bei Erreichen eines unzulässig hohen Innendrucks öffnen, poröse Fritten aus Glas oder Keramik, welche die Gasaustrittsöffnung ausfüllen und das explosible Knallgasgemisch im Batterieinnern vor einer Zündung durch Funkeneinwirkung von außen schützen (Zünddurchschlagssperre), ferner im Stopfen angeordnete Katalysatoren für die Rekombination der Zellengase, Schwappschutzkörbe oder Einrichtungen zur Abscheidung von Säuretröpfchen aus dem Gasstrom.

Ein der DE-OS 2208858 entnehmbarer einfacher Verschlußstofen ist z.B. mit einem aufsteckbaren scheibenförmigen Absperrteil aus einem gasdurchlässigen, jedoch weitgehend flüssigkeitsundurchlässigen Material versehen.

Ein anderer, aus der DE-PS 2402718 bekannter Stopfen besitzt ein poröses Absperrteil, dem jedoch waagerechte Platten mit Öffnungen vorgelagert sind, welche die Zellengase in eine gewundene Strömungsbahn zwingen.

Bekannt ist auch aus dem deutschen Gebrauchsmuster G 9104291 die Kombination zwischen einem Druckentlastungsventil und einem Frittenkörper in einem Verschlußstopfen.

Nicht nur aus Bleibatterien mit Flüssigelektrolyt, sondern auch aus solchen mit festgelegtem Elektrolyten kann ein säurenebelhaltiges Gas entweichen. Dies ist bedingt durch Synaerese, eine vorwiegend im Kopfraum der Zelle stattfindende spontane Entquellung unter Abscheidung von Flüssigkeit aus dem Säuregel bei der Alterung.

Besonders bei liegendem Einbau der Zellen wird dieser Effekt verstärkt, so daß beim Öffnen des Überdruckventils Säurenebel ins Freie austreten und sich auf dem Zellendeckel als Tropfen niederschlagen. Von dieser lästigen Erscheinung für das Wartungspersonal abgesehen, bewirken die Säurenebel, daß die Stopfenfunktion beeinträchtigt wird.

Der Erfindung liegt deshalb die Aufgabe zugrunde, ein Austreten von Aerosolen aus der Batteriezelle zu verhindern, zugleich aber auch sicherzustellen, daß die Funktionsfähigkeit des Überdruckventils über die Lebensdauer erhalten bleibt.

Die Aufgabe wird erfindungsgemäß mit einem Verschlußstopfen gelöst, wie er durch Anspruch 1 definiert ist.

Der neue Verschlußstopfen ist demnach so eingerichtet, daß die Gase auf ihrem Zwangswege durch das Stopfengehäuse nach draußen zuerst die mikroporöse Fritte und danach das Druckentlastungsventil passieren.

Auf diese Weise verfangen sich die feinen Tröpfchen des Säure-Aerosols in der porösen Platte, während die Teile des Ventils nunmehr einem trockenen Gasstrom ausgesetzt sind, welcher, insbesondere bei empfindlichen Metallteilen wie Druckfedern und dergl., keine Korrosionsschäden anrichten kann. Das Ventil ist durch den, in Gasauslaßrichtung gesehen, vorgelagerten Frittenkörper vor aggressiver Feuchtigkeit geschützt und arbeitet für lange Zeit zuverlässig.

Eine bevorzugte Ausführung des neuen Verschlußstopfens wird anhand einer Figur beschrieben.

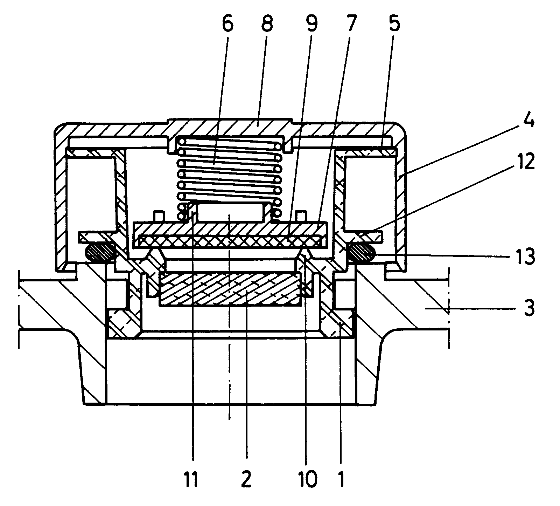

Aus der Figur ist zunächst ein Gehäusegrundkörper oder Sockel 1 ersichtlich, dessen unterer Teil die Fassung für eine mikroporöse Fritte 2 bildet und der in eine Öffnung des Akkumulatorendeckels 3 eingerenkt ist. Die Verbindung mit dem Deckel kann anstelle eines Renkverschlusses auch mittels Schraubverschluß erfolgen.

Die Fritte besteht aus einem nicht säure- bzw. wasserbenetzbaren Werkstoff, vorzugsweise einem Kunstharz wie Polypropylen oder Polyethylen.

Die Porosität der Fritte ist so ausgelegt, daß sie vorhandene Aerosole wirksam zurückhält, durch abgeschiedene Feuchtigkeitströpfchen aber nicht verstopft werden kann.

Von Vorteil ist eine möglichst tiefe Position der Fritte innerhalb der Einfüllöffnung. Sie sollte zumindest nicht höher als die Ebene des Deckels liegen.

Mit dem Gehäusegrundkörper fest verbunden ist eine Abdeckkappe 4. Diese kann an einem am Gehäusegrundkörper umlaufenden Außenflansch 5 angeklebt oder vorzugsweise angeklipst sein.

In dem von Abdeckkappe und Gehäusegrundkörper oberhalb der Fritte eingeschlossenen Raum ist das Druckentlastungsventil, das eine Druckfeder 6 und einen Dichtteller 7 umfaßt, angeordnet. Dabei wird die Druckfeder von einer dem Wandmaterial der Abdeckkappe ausgeformten zentrischen Aufnahme 8 abgestützt.

Die Unterseite des Dichttellers besitzt eine Dichtungsauflage 9, mit der er unter dem Druck der vorgespannten Feder einer dem Gehäusegrundkörper angeformten, kreisförmig umlaufenden Dichtkante 10 aufliegt.

Vor dem Anbringen der Abdeckkappe werden alle Bestandteile des Druckentlastungsventils, zuerst der Dichtteller durch Auflegen auf die Dichtkante, darauf die Druckfeder durch Fixierung auf dem Dichtteller, auf dem Gehäusegrundkörper vormontiert. Dabei wird die Druckfeder durch einen auf der Oberseite des Dichttellers umlaufenden Steg 11 zentriert und nach dem Aufsetzen der Abdeckkappe zwischen Federaufnahme 8 und Dichtteller 7 so gehalten, daß ein exaktes Spiel des Dichttellers zwischen Schließstellung und Öffnungsstellung gewährleistet ist.

Ein weiterer, an der Außenseite des Gehäusegrundkörpers umlaufender flanschartiger Vorsprung 12 übergreift einen O-Ring 13, der mit Vorteil ebenfalls vor dem Befestigen der Abdeckkappe 4 am Gehäusegrundkörper vormontiert sein kann. Bei der Schließungsdrehung während des Einrenkens wird durch den flanschartigen Vorsprung die notwendige Dichtungspressung des O-Ringes gegen den Deckel 3 ausgeübt.

In der Figur nicht dargestellte Gasauslaßöffnungen sind neben der Aufnahme für die Druckfeder in der Stirnwand der Abdeckkappe vorgesehen.

Durch die erfindungsgemäße Konstruktion des Verschlußstopfens wird nicht nur verhindert, daß Feuchtigkeit aus dem Gasraum der Zelle nach draußen gelangen kann, sondern auch das korrosionsanfällige Sicherheitsventil vor einem aggressiven Feuchtigkeitszutritt bewahrt.

## Patentansprüche

1. Verschlußstopfen für einen Bleiakkumulator mit einer mikroporösen Fritte und einem Druckentlastungsventil in einem Gehäuse, das abgedichtet gegen den Zellendeckel in der Elektrolyteinfüllöffnung befestigbar ist, dadurch gekennzeichnet, daß die mikroporöse Fritte dem Druckentlastungsventil, in Gasauslaßrichtung gesehen, vorgelagert ist.

2. Verschlußstopfen nach Anspruch 1, dadurch gekennzeichnet, daß sein Gehäuse aus einem die mikroporöse Fritte (2) aufnehmenden Gehäusegrundkörper (1) besteht, der mit einer Abdeckkappe (4) fest verbunden ist.

3. Verschlußstopfen nach den Ansprüchen 1 und 2, dadurch gekennzeichnet, daß das Druckentlastungsventil eine Druckfeder (6) mit einem Dichtteller (7) umfaßxt.

4. Verschlußstopfen nach Anspruch 3, dadurch gekennzeichnet, daß die Druckfeder von einer dem Wandmaterial der Abdeckkappe ausgeformten zentrischen Aufnahme (8) abgestüzt ist.

5. Verschlußstopfen nach einem der Ansprüche 3 oder 4, dadurch gekennzeichnet, daß die Unterseite des Dichttellers eine Dichtungsauflage (9) besitzt, mit der er unter dem Druck der vorgespannten Feder einer dem Gehäusegrundkörper angeformten, kreisförmig umlaufenden Dichtkante (10) aufliegt.

6. Verschlußstopfen nach einem der Ansprüche 3 bis 5, dadurch gekennzeichnet, daß die Oberseite des Dichttellers einen zentrisch umlaufenden Steg (11) zur Fixierung der Druckfeder besitzt.

7. Verschlußstopfen nach einem der Ansprüche 3 bis 6, dadurch gekennzeichnet, daß die Bestandteile des Druckentlastungsventils auf dem Gehäusegrundkörper vormontiert sind.

8. Verschlußstopfen nach einem der Ansprüche 1 bis 7, dadurch gekennzeichnet, daß die Abdeckkappe mit dem Gehäusegrundkörper unlösbar verklipst ist.

9. Verschlußstopfen nach einem der Ansprüche 1 bis 8, dadurch gekennzeichnet, daß der Gehäusegrundkörper in die Elektrolyteinfüllöffnung eingerenkt oder eingeschraubt ist.
